## Europäisches Patentamt

## European Patent Office

## Office européen des brevets

(19)

(11) Publication number: **0 099 185**
**B1**

(12) # EUROPEAN PATENT SPECIFICATION

(45) Date of publication of patent specification: **27.05.87**

(51) Int. Cl.⁴: **B 64 C 27/04, B 64 C 23/00**

(21) Application number: **83303477.0**

(22) Date of filing: **15.06.83**

(54) Helicopter.

(30) Priority: **05.07.82 GB 8219362**

(43) Date of publication of application:
**25.01.84 Bulletin 84/04**

(45) Publication of the grant of the patent:
**27.05.87 Bulletin 87/22**

(84) Designated Contracting States:
**DE FR GB IT**

(56) References cited:
**FR-A-2 434 754**

**HOERNER: "Fluid-dynamic Drag". 1958.
Published by the author, 148 Busteed Drive,
MIDLAND PARK, NEW JERSEY, (US), pages
3-6, 3-7.**

(73) Proprietor: **WESTLAND plc
Westland Works
Yeovil Somerset (GB)**

(72) Inventor: **Brocklehurst, Alan
Sorrento, 9 Cross Road Bradford Abbas
Sherborne Dorset (GB)**
Inventor: **Cook, Christopher Vincent
Wellhams House Tintinhull
Yeovil Somerset (GB)**

(74) Representative: **Jack, Bruce James et al
FORRESTER & BOEHMERT Widenmayerstrasse
4/I
D-8000 Munchen 22 (DE)**

# Description

This invention relates to helicopters.

In one form of helicopter, a single main sustaining rotor is located above a fuselage which includes a longitudinally extending tail boom carrying an anti-torque or tail rotor adjacent its rear end. The upper surface of the tail boom is often smoothly curved or radiussed. In operating such a helicopter, difficulty is sometimes experienced in maintaining a desired heading in low speed sideways flight especially when operating at a high weight, and this can restrict the usefulness of the helicopter in some operational roles and may also mean that high tail rotor loads and high tail rotor torque may be encountered. Sideways flight means flight during which the wind direction relative the helicopter is out of the fore-and-aft direction defined by the helicopter fuselage and includes for example, hovering in a side wind.

In one aspect, the invention provides a helicopter having a main sustaining rotor located above a fuselage and a rearwardly extending tail boom carrying an anti-torque rotor adjacent a rear end thereof, characterised by prevention means extending substantially longitudinally along an upper surface of the tail boom and adapted to prevent attached airflow around the tail boom.

By an upper surface of the tail boom we include all of the surface of the tail boom above a horizontal plane containing the centreline of the tail boom.

The prevention means may be continued forwardly from the tail boom to extend along the fuselage so as to be encompassed by as much as possible of the operating radius of the main sustaining rotor and may also be extended rearwardly along the tail boom beyond the radius of the sustaining rotor.

The prevention means may comprise a continuous thin metal strip protruding from the surface of the tail boom, and in one embodiment such strip may protrude at an angle of approximately 45 degrees from the vertical centreline of the tail boom.

In another aspect, the invention provides a helicopter having a main sustaining rotor located above a fuselage and a rearwardly extending tail boom having a radiussed upper surface and carrying an anti-torque rotor adjacent a rear end thereof, characterised by prevention means adapted to prevent attached airflow around the tail boom and comprising a longitudinally extending metal strip protruding from the upper surface of the tail boom.

In yet another aspect, the invention provides a helicopter having a main sustaining rotor located above a fuselage for rotation in a counterclockwise direction when viewed from above and including a rearwardly extending tail boom having a radiussed upper surface and carrying an anti-torque rotor adjacent a rear end thereof, characterised by prevention means adapted to prevent attached airflow around the tail boom and comprising a longitudinally extending metal strip protruding from the port side of the upper surface of the tail boom.

The invention will now be described by way of example only and with reference to the accompanying drawings in which,

Figure 1 is a side elevation of part of a helicopter constructed in accordance with an embodiment of the invention,

Figure 2 is a cross-section view taken in the direction of arrows A—A of Figure 1,

Figure 3 is a graph plotting tail rotor pitch against right sideways flight velocity of the helicopter of Figure 1 before and after incorporation of the invention.

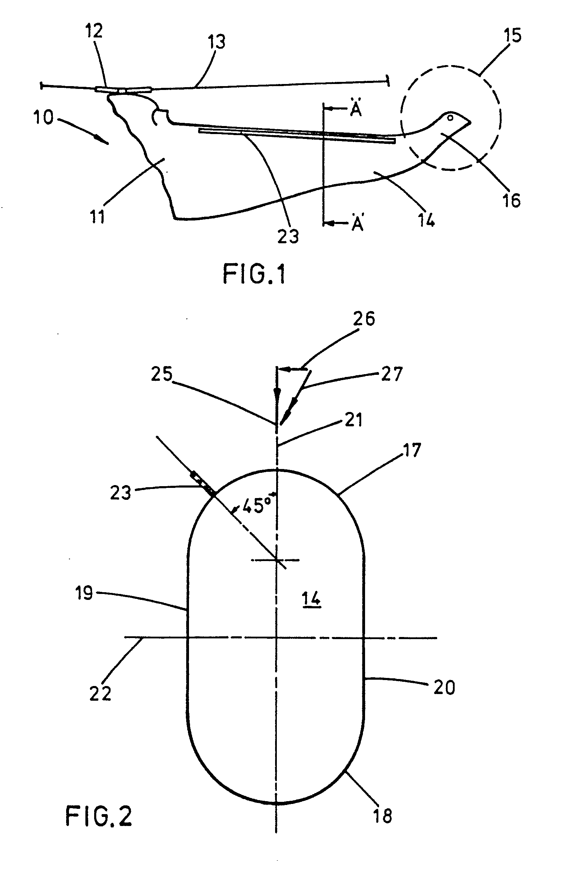

Referring now to Figure 1, a helicopter generally indicated at 10 includes a fuselage 11 and a single main sustaining rotor 12 having a plurality of rotor blades 13 rotatable in a counterclockwise direction when viewed from above. A tail boom 14 extends rearwardly from the fuselage 11, and an anti-torque rotor 15 is rotatably mounted on the side of a fin 16 supported at the rear end of the tail boom 14 for rotation in a generally vertical plane.

Referring particularly to Figure 2, the tail boom 14 comprises a structure elongated in the vertical direction with upper and lower radiussed surfaces 17 and 18 respectively joining generally vertical port and starboard side surfaces 19 and 20. The tail boom structure is generally symmetrical about a vertical centreline 21 and about a horizontal centreline 22.

In some modes of operation such a helicopter, e.g. at a high all up weight, difficulty was experienced in maintaining a desired heading during right sideways flight. Heading control is provided by a lateral thrust force generated by the anti-torque rotor, and the pitch angle of the rotor blades of the anti-torque rotor determines the direction and magnitude of the lateral thrust force. A maximum permissible pitch angle setting to prevent dynamic instability of the blades is usually set by a fixed stop in the anti-torque rotor control system. It was found that during right sideways flight, the maximum pitch angle setting was reached at a very low sideways velocity with the result that heading control above that velocity was extremely difficult since no further increase in the lateral thrust force from the tail rotor was available. An investigation showed that, whilst several aerodynamic interactions contributed to the problem, an adverse force generated on the tail boom 14 during this phase of operation was particularly significant.

It was found that the adverse force, which manifests itself as a sideways force resulting from an attached airflow downwardly over the surface of the tail boom, was generated by a combination of main rotor wake airflow and an airflow resulting from the sideways velocity of the helicopter. This is clearly illustrated by the vector diagram forming part of Figure 2 which shows that a main rotor wake airflow 25 from the counterclockwise rotation of rotor 12 and a sideways airflow 26 provide a resultant airflow 27 in a downward direction and at an angle to the vertical centreline 21 of the tail boom 14. The resultant airflow 27 is speeded up as it flows around the radiussed upper surface 17 of the port side 19 of the tail boom 14 to create a suction effect at the port side of the tail boom in a manner similar to a conventional aerofoil, resulting in a sideways force that is active in the same direction and is additional to that due directly to the sideways airflow 26.

Various means of promoting flow separation to prevent the attached airflow around the tail boom 14 were considered, and one solution is illustrated in Figures 1 and 2.

A continuous thin strip 23 of aluminium was secured longitudinally along the upper port surface of the tail boom 14. The strip 23 was approximately 76 mm wide and was continued forwardly along the outer surface of the fuselage 11 in order to be encompassed by as much as possible of the operating radius of the main rotor blades 13. As shown in Figure 2, the strip 23 protrudes generally radially from the curved upper surface 17 on the port side of the tail boom 14 at an angle of approximately 45 degrees from the vertical centreline 21.

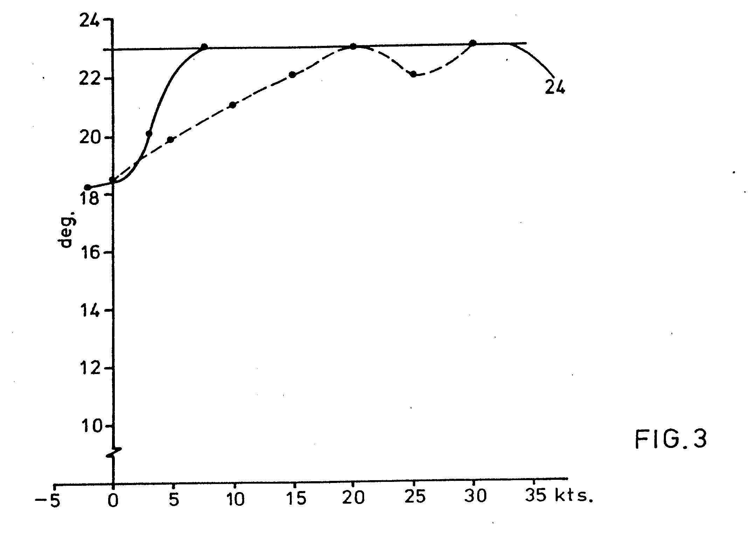

The graph of Figure 3 derives from data obtained during flight tests. The graph plots the pitch angle of the rotor blades of the anti-torque rotor 15 against the right sideways flight velocity with a relative wind azimuth at 90 degrees to the longitudinal centreline of the fuselage, and includes data plotted in full line in respect of an unmodified helicopter and data plotted in broken line in respect of a helicopter modified according to the above described embodiment of this invention. The horizontal line identified at 24 represents a maximum allowable pitch setting of the rotor blades of the anti-torque rotor (about 23 degrees) which is set on the helicopter by a fixed stop on the controls.

It will be noted that in the unmodified helicopter (the full line) the pitch angle increases rapidly at low right sideways velocities in order to maintain a desired heading, and that at a right sideways velocity of about 6 knots the stop representing the maximum permissible pitch setting is reached. In other words, yaw control by the anti-torque rotor is lost at a right sideways velocity of about 6 knots, and no control margin is available during right sideways velocities above that figure.

Compare now the broken line in Figure 3 and it will be seen that the pitch angle necessary to maintain a desired heading during right sideways flight increases much more gradually and uniformly up to a speed of about 20 knots, at which the necessary pitch angle remains just below the maximum permissible angle represented by line 24 on Figure 3, sufficient for the pilot to retain control. Above this speed, the necessary pitch angle reduces slightly then increases again to reach the maximum permissible angle at a right sideways velocity of about 30 knots.

Thus, the incorporation of this invention results in a useful increase in the right sideways velocity range through which yaw control by the anti-torque rotor 15 is maintained, and represents a significant improvement in the low speed handling and manoeuvrability of the helicopter. Flight tests confirmed that the invention also provides significant improvements in right sideways flight at other relative wind azimuth angles, and it is considered that further improvement could be achieved particularly in cases where the relative wind azimuth angle is less than 90 degrees by extending the prevention means rearwardly along the fuselage beyond the radius of the sustaining rotor blades.

Whilst one embodiment has been described and illustrated it will be understood that many modifications may be made without departing from the scope of the invention as defined in the appended claims. For example, other forms of prevention means may be incorporated such as either a sharp or radiussed protrusion formed integral with the tail boom or incorporated in the cross-sectional shape of the tail boom by way, for example, of a sharp or radiussed corner along an upper surface. In a further alternative the prevention means may comprise a longitudinal slot and means may be provided to blow air through the slot to break-up the attached airflow around the tail boom. The prevention means may be located at any position on the upper surface (as hereinbefore defined) of the tail boom and may depend to a certain extent on the direction of rotation of the main sustaining rotor. Thus, in a helicopter in which the main sustaining rotor rotates clockwise when viewed from above it may be found that the problem is encountered during left sideways flight and that maximum benefit is achieved with the prevention means located along the starboard upper surface of the tail boom 14. The invention can be incorporated in helicopters having a tail boom with cross-sectional shapes other than that hereinbefore described, such as a circular cross-sectional shape.

**Claims**

1. A helicopter (10) having a main sustaining rotor (12) located above a fuselage (11) and a rearwardly extending tail boom (14) carrying an anti-torque rotor (15) adjacent a rear end thereof, characterised by prevention means (23) extending substantially longitudinally along an upper surface of the tail boom (14) and adapted to prevent attached airflow around the tail boom (14).

2. A helicopter (10) as claimed in Claim 1, further characterised in that the prevention means (23) is continued forwardly from the tail boom (14) to extend along the fuselage (11).

3. A helicopter (10) as claimed in Claim 1 or Claim 2, further characterised in that the prevention means (23) is extended rearwardly along the tail boom (14) beyond the radius of the sustaining rotor (12).

4. A helicopter (10) as claimed in any preceding Claim, further characterised in that the prevention means (23) comprise a metal strip (23) protruding from the surface of the tail boom (14).

5. A helicopter (10) as claimed in Claim 4, further characterised in that the metal strip (23) protrudes from the surface of the tail boom (14) at an angle of approximately 45 degrees from a vertical centreline (21) of the tail boom (14).

6. A helicopter (10) having a main sustaining rotor (12) located above a fuselage (11) and a rearwardly extending tail boom (14) having a radiussed upper surface and carrying an anti-torque rotor (15) adjacent a rear end thereof, characterised by prevention means (23) adapted to prevent attached airflow around the tail boom (14) and comprising a longitudinally extending metal strip (23) protruding from the upper surface of the tail boom (14).

7. A helicopter (10) having a main sustaining rotor (12) located above a fuselage (11) for rotation in a counterclockwise direction when viewed from above and including a rearwardly extending tail boom (14) having a radiussed upper surface and carrying an anti-torque rotor (15) adjacent a rear end thereof, characterised by prevention means (23) adapted to prevent attached airflow around the tail boom (14) and comprising a longitudinally extending metal strip (23) protruding from the port side of the upper surface of the tail boom (14).

## Patentansprüche

1. Hubschrauber (10) mit einem Haupttragrotor (12), angeordnet oberhalb eines Rumpfes (11) und mit einem sich nach rückwärts erstreckenden Schwanzteil (14), welches einen Rotor (15) besitzt, um einem Drehmoment entgegenzuwirken, angrenzend seines rückwärtigen Endes, gekennzeichnet durch Verhinderungselemente (23), die sich im wesentlichen längs entlang einer oberen Fläche des Schwanzteils (14) erstrecken und geeignet sind, eine anliegende Luftströmung um das Schwanzteil (14) herum zu verhindern.

2. Hubschrauber (10) nach Anspruch 1, weiter dadurch gekennzeichnet, daß die Verhinderungselemente (23) sich nach vorne von dem Schwanzteil (14) fortsetzen, um sich entlang des Rumpfes (11) zu erstrecken.

3. Hubschrauber (10) nach Anspruch 1 oder 2, weiter dadurch gekennzeichnet, daß die Verhinderungselemente (23) sich rückwärts entlang dem Schwanzteil (14) erstrecken, über den Radius des Tragrotors (12) hinaus.

4. Hubschrauber (10) nach einem der vorstehenden Ansprüche, weiter dadurch gekennzeichnet, daß die Verhinderungselemente (23) einen Metallstreifen (32) aufweisen, der von der Oberfläche des Schwanzteils (14) vorsteht.

5. Hubschrauber (10) nach Anspruch 4, weiter dadurch gekennzeichnet, daß der Metallstreifen (23) von der Oberfläche des Schwanzteils (14) vorsteht in einem Winkel von etwa 45 Grad bezüglich einer vertikalen Mittellinie (21) des Schwanzteils (14).

6. Hubschrauber (10) mit einem Haupttragrotor (12), angeordnet oberhalb eines Rumpfes (11) und einem sich nach rückwärts erstreckenden Schwanzteil (14), mit einer radiusförmigen oberen Oberfläche und tragend einen Rotor (15), um einem Drehmoment entgegenzuwirken, angrenzend seines rückwärtigen Endes, gekennzeichnet durch Verhinderungselemente (23), die geeignet sind, eine anliegende Luftströmung um das Schwanzteil (14) herum zu verhindern, und aufweisend einen sich in Längsrichtung erstreckenden Metallstreifen (23), der über die obere Oberfläche des Schwanzteils (14) hinausragt.

7. Hubschrauber (10) mit einem Haupttragrotor (12), angeordnet oberhalb eines Rumpfes (11), für eine Drehung in einem Gegenuhrzeigersinn bei Betrachtung von oben und aufweisend ein sich nach rückwärts erstreckendes Schwanzteil (14) mit einer radiusförmig geformten Oberfläche und tragend einen Rotor (15) um einem Drehmoment entgegenzuwirken, angrenzend dessen rückwärtigen Endes, gekennzeichnet durch Verhinderungselemente (23), die geeignet sind, eine anliegende Luftströmung um das Schwanzteil (14) herum zu verhindern, und aufweisend einen sich in Längsrichtung erstreckenden Metallstreifen (14), der von der Backbordseite der oberen Oberfläche des Schwanzteils (14) hervorsteht.

## Revendications

1. Hélicoptère (10) comprenant un rotor principal de sustentation (12) disposé au-dessus d'un fuselage (11) et une poutre de queue (14) s'étendant vers l'arrière et supportant un rotor anticouple (15) à son extrémité arrière, caractérisé par des moyens de prévention (23) s'étendant sensiblement longitudinalement sur la surface supérieure de la poutre de queue (14) et destinés à empêcher un écoulement d'air collé autour de la poutre de queue (14).

2. Hélicoptère (10) suivant la revendication 1, caractérisé en outre en ce que les moyens de prévention (23) se prolongent vers l'avant à partir de la poutre de queue (14) pour s'étendre sur le fuselage (11).

3. Hélicoptère (10) suivant la revendication 1 ou 2, caractérisé en outre en ce que les moyens de prévention (23) s'étendent vers l'arrière sur la poutre de queue (14) au-delà du rayon du rotor de sustentation (12).

4. Hélicoptère (10) suivant l'une quelconque des revendications précédentes, caractérisé en outre en ce que les moyens de prévention (23) comprennent une bande de métal (23) faisant saillie par rapport à la surface de la poutre de queue (14).

5. Hélicoptère (10) suivant la revendication 4, caractérisé en outre en ce que la bande de métal (23) fait saillie par rapport à la surface de la poutre de queue (14) suivant un angle d'environ 45° par rapport à l'axe vertical (21) de la poutre de queue (14).

6. Hélicoptère (10) comprenant un rotor principal de sustentation (12) disposé au-dessus d'un fuselage (11) et une poutre de queue s'étendant vers l'arrière (14), présentant une surface supérieure courbe et supportant un rotor anti-couple (15) à son extrémité arrière, caractérisé par des moyens de prévention (23) destinés à empêcher un écoulement d'air collé autour de la poutre de queue (14) et comprenant une bande de métal (24) s'étendant longitudinalement et faisant saillie par rapport à la surface supérieure de la poutre de queue (14).

7. Hélicoptère (10) comportant un rotor principal de sustentation (12) disposé au-dessus d'un fuselage (11) de manière à tourner en sens inverse des aiguilles d'une montre, vu de dessus, et comprenant une poutre de queue s'étendant vers l'arrière (14) ayant une surface supérieure courbe et supportant un rotor anti-couple (15) à son extrémité arrière, caractérisé par des moyens de prévention (23) destinés à empêcher un écoulement d'air collé autour de la surface de la poutre de queue (14) et comprenant une bande de métal (23) s'étendant longitudinalement et faisant saillie du côté gauche par rapport à la surface supérieure de la poutre de queue (14).

0 099 185

FIG.1

FIG.2

1

FIG.3